# EUROPEAN PATENT APPLICATION

(11) **EP 4 737 421 A1**
(43) Date of publication of application: **06.05.2026**
(21) Application number: 25210384.1
(22) Date of filing: 22.10.2025
(51) Int. Cl.: C04B 14/22, C04B 20/02, C04B 28/02

(54) **POZZOLANIC MATERIAL, PREPARING METHOD THEREOF AND PRODUCT THEREOF**

(30) Priority: 01.11.2024 TW 113141954
(71) Applicant: TCC Group Holdings Co., Ltd., Taipei City 104 (TW)
(72) Inventor: CHIU, YU-WEN, 104 Taipei City (TW); LIN, CHUNG-WEN, 104 Taipei City (TW); WU, MING-FU, 104 Taipei City (TW); CHANG, CHENG-HSIN, 104 Taipei City (TW); SHIH, NAI-CHUAN, 104 Taipei City (TW); SYU, WEI-DONG, 104 Taipei City (TW); CHEN, I-TING, 104 Taipei City (TW); LI, SONG-MING, 104 Taipei City (TW)
(74) Representative: Meissner Bolte Partnerschaft mbB

(57) **Abstract**

The present invention provides a method for preparing a pozzolanic material, which includes the following steps: collecting waste glass; crushing the waste glass into waste glass particles having a predetermined size; and grinding the waste glass particles to obtain finely ground glass powder having a predetermined particle size and a predetermined particle size distribution for serving as the pozzolanic material. The present invention further provides a pozzolanic material prepared by the method, as well as a product manufactured using the pozzolanic material.

## Description

### BACKGROUND OF THE INVENTION

### FIELD OF THE INVENTION

The present invention relates to a pozzolanic material, a preparation method thereof and a product thereof, and in particular, to a pozzolanic material including activated waste glass, a preparation method thereof and a product thereof.

### DESCRIPTION OF THE PRIOR ART

Taiwan's buildings mainly use the building materials such as rebar and concrete, which are energy-intensive and have considerable carbon emissions. Concrete is the most used material, consuming more than 10 million tons of cement each year, and the production of one ton of cement clinker will generate approximately 0.9 to 1.0 tons of carbon dioxide emissions. Therefore, in order to reduce carbon emissions and achieve the Net Zero goal, it is necessary to consider reducing the use of concrete or improving the amount of cement used in the concrete formula. However, how to effectively reduce the amount of cement while maintaining the quality of safety, workability and durability is an important issue in the current construction industry. In the prior art, it has been found that pozzolanic material can be used to replace part of cement clinker to achieve the purpose of reducing the amount of cement in concrete.

"Pozzolanic material" refers to a substance that has only a little or no cementation properties, but can react with calcium hydroxide (Ca(OH)₂) in cement hydration products to form a product with cementation properties under sufficient humidity conditions. Such a reaction is called the "pozzolanic reaction", which is also known as the "secondary hydration cementation reaction".

Common pozzolanic material includes coal fly ash and silica ash, etc., and their chemical compositions and physical properties vary greatly. Fly ash from coal-fired power plants is mainly composed of silicon dioxide (SiO₂) and aluminum oxide (Al₂O₃). Silica ash, also known as fine silicon dioxide, is a by-product of the iron-silicon alloy smelting process. Its main component is amorphous silicon dioxide. Among them, the pozzolanic activity index of silica ash is higher, while the pozzolanic activity of coal fly ash is relatively low.

In recent years, because glass is non-biodegradable, it cannot be decomposed by landfill or composting, and is non-flammable, resource recycling has become its best treatment method. Further, because the main component of waste glass on the market is amorphous silicon dioxide, it can undergo pozzolanic reaction with cement when added to cement and has begun to be used in the construction industry. Waste glass mainly is derived from glass containers, flat glass and TFT-LCD liquid crystal substrate glass. In addition, as the demand for solar photovoltaics increases, the amount of waste glass from solar photovoltaic panels to be processed will also increase accordingly in the future.

At present, waste glass can be used as engineering aggregate after screening, crushing, and impurity removal. It is mostly used in recycled products such as asphalt pavements, bricks, and cement products. However, most of these applications are downcycling uses of material recycling, and fail to fully exploit the high silicon content and vitreous content of waste glass. Previous related technologies, such as Patent Nos. CN103553491A and CN103172323A, only disclosed a method for preparing concrete using waste glass, but did not explore the activity of the waste glass. In addition, although Patent Nos. TWI761284 and TWI796036 propose activating glass powder with an alkali activator to form a new inorganic binder or inorganic solidifier without cement clinker, the use of the alkali activator will increase production costs, its commercial application has yet to be verified, and thus its market acceptanceremians low.

Therefore, in order to address the problems of insufficient activity, low recycling rate and inadequate concrete performance of waste glass when used as pozzolanic material in the prior art, it is urgent to develop methods that enhance the pozzolanic bonding activity of waste glass. Such methods can increase its recycling rate and create high added value, which represents an important goal of current technological development.

### SUMMARY OF THE INVENTION

Based on the above reasons, the present invention provides a method for preparing a pozzolanic material using waste glass, and in particular, a technology for activating the waste glass and reproducing it into a pozzolanic material.

In one aspect of the present invention, a method for preparing a pozzolanic material includes the following steps: collecting waste glass; crushing the waste glass into waste glass particles having a predetermined size; and grinding the waste glass particles to obtain finely ground glass powder having a predetermined particle size and a predetermined particle size distribution for serving as the pozzolanic material.

Preferably, the predetermined size of the waste glass particles may be less than about 10 mm.

Preferably, the predetermined particle size of the finely ground glass powder may be less than about 45 µm.

Preferably, the predetermined particle size distribution of the finely ground glass powder may have a sieve residue of less than about 5%.

Preferably, the finely ground glass powder is further treated using a chemical auxiliary agent.

Preferably, the chemical auxiliary agent may include diethylene glycol, triethanolamine, triisopropanolamine. or any combination thereof.

Preferably, the finely ground glass powder may have a predetermined specific surface area, which is preferably from about 2500 cm²/g to about 8000 cm²/g, further preferably from about 3000 cm²/g to 6000 cm²/g.

Preferably, the waste glass may come from a glass container, flat glass, solar photovoltaic panel glass, TFT-LCD liquid crystal substrate glass, or any combination thereof.

Preferably, the method further includes sorting the waste glass according to its type and/or color before the crushing step and/or the grinding step.

In another aspect of the present invention, a pozzolanic material prepared by the method described above is provided. Preferably, the pozzolanic material further includes coal fly ash, silica ash, or any combination thereof.

In another aspect of the present invention, a product is provided, which includes a body having a predetermined shape; and the pozzolanic material prepared by the method described above.

Preferably, the predetermined shape of the product may include a circular shape, a square shape, a conical shape, an arched shape, a spherical shape, a cylindrical shape or any shape designed as required.

Preferably, the product may be a building, a decoration, a container or a mold.

Preferably, the product may further include cement.

Preferably, the product may further include concrete or cement mortar.

### BRIEF DESCRIPTION OF THE DRAWINGS

FIG. 1 is a flow chart of a method for preparing a pozzolanic material according to an embodiment of the present invention.
FIG. 2 is a schematic diagram of a pozzolanic product according to an embodiment of the present invention.
FIG. 3 shows the results of an activity test of Portland limestone cement (IL) concrete using the finely ground glass powder according to an embodiment of the present invention.

### DETAILED DESCRIPTION OF THE EMBODIMENTS

In order to achieve the above-mentioned objectives, the present invention preferably adopts the following technical solution: crushing, grinding and activating waste glass to convert it into a highly active pozzolanic material. This enables an increased addition ratio of the waste glass in cement concrete and improves the fresh mix performance and hardening performance of the concrete.

### Definition

The term "cement" as used herein may refer to a building material, which is hydraulic cement obtained by grinding clinker with hydraulic crystalline calcium silicate as the main component. When cement is mixed with water, a hydration reaction occurs to produce calcium silicate hydrate (C-S-H) and calcium hydroxide (Ca(OH)₂).

The term "hydration reaction" as used herein refers to the chemical reaction between water and the components in the cement such as tricalcium silicate (C₃S) and dicalcium silicate (C₂S) to produce hydration products such as calcium silicate hydrate (C-S-H) and calcium hydroxide (Ca(OH)₂) when cement is mixed with water. Calcium silicate hydrate (C-S-H) gradually generates and forms a strong structure, giving concrete good mechanical properties and durability.

The term "pozzolanic reaction" as used herein refers to a chemical reaction that occurs in cement-based materials, involving the reaction between pozzolanic materials (such as coal fly ash, silica ash, or finely ground glass powder described herein) and calcium hydroxide (Ca(OH)₂) generated by cement hydration. Specifically, the amorphous silicon dioxide (SiO₂) in the pozzolanic material reacts with Ca(OH)₂ in the presence of water to generate additional calcium silicate hydrate (C-S-H), which can fill the microscopic channels of the cement paste, refine the pores, and improve the water tightness, thereby increasing the compressive strength, density and durability of concrete, cement mortar or cement products, and improving their later strength.

The term "grinding and grading (system)" as used herein refers to the process of feeding raw materials (e.g., waste glass particles) into a grinding mill for grinding. The grinding mill may be a ball mill, a vertical roller mill, a ring roller mill or a Raymond mill. The process may be performed by continuously feeding and discharging raw materials or by feeding a certain weight of raw materials into the grinding mill at one time. After grinding, the material may enter a micro powder classifier for particle size control. In this case, the finer material may be output as the final product, while the coarser material may be returned to the mill for re-grinding until the desired particle size is achieved.

The term "waste glass particles" as used herein refers to waste glass having a predetermined size obtained by only undergoing the crushing process of the present invention but without being ground by a grinding and grading system (hereinafter referred to as "physical activation") and without being treated with a chemical auxiliary agent (hereinafter referred to as "chemical activation").

The term "finely ground glass powder" as used herein refers to the waste glass having a predetermined particle size and a predetermined particle size distribution obtained by further subjecting the aforementioned waste glass particles to the physical activation and/or chemical activation steps of the present invention.

The term "activity index" as used herein refers to the ability of the aforementioned finely ground glass powder to undergo a secondary reaction with calcium hydroxide (Ca(OH)₂) produced after cement hydration when used as a pozzolanic material. The activity index is an indicator for evaluating the activity of the pozzolanic material, representing the ratio of the compressive strength of the mixture of the pozzolanic material and cement mortar (Test Group) to that of pure cement mortar (Control Group) at a certain mixing ratio (usually 20% of the weight of cement replaced by the pozzolanic material). The higher the ratio, the greater the contribution of the pozzolanic material to improving the compressive strength of the mixture. This test method is based on the relevant provisions of CNS 10896 "Method for sampling and testing of fly ash or natural pozzolans for use as a mineral admixture in portland-cement concrete".

The term "sieve residue" as used herein refers to, after the aforementioned finely ground glass powder is sieved through a sieve with a predetermined aperture, the ratio of the finely ground glass powder remaining on the sieve to the total amount of the finely ground glass powder before sieving.

The term "about" as used herein is used to modify a term or value so that it is not an absolute value but cannot be found in the prior art. In some embodiments, "about" encompasses values within 1%, 2%, 3%, 4%, 5%, 6%, 7%, 8%, 9% or 10% (inclusive of these values), or any intermediate range (e.g., ±2% to 6%) of the measured value, which includes, at a minimum, the extent of expected experimental, technical and instrumental error for the method, analysis or measurement.

### Embodiments

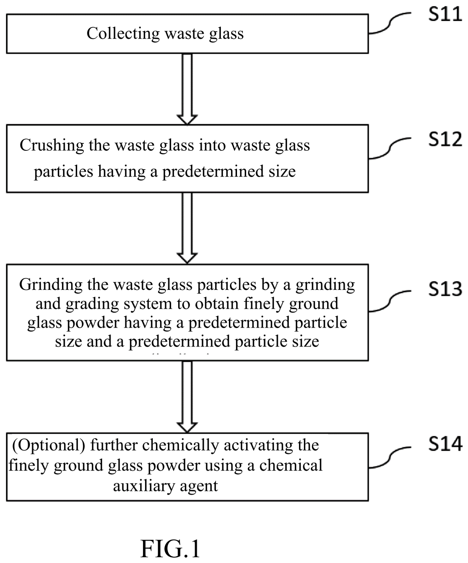

Referring to FIG. 1, it is a flow chart of a method for preparing a pozzolanic material according to an embodiment of the present invention. This preparation method includes step S11: collecting waste glass; step S12: crushing the waste glass into waste glass particles having a predetermined size, wherein the predetermined size is preferably less than about 10 mm, more preferably less than about 8 mm, and even more preferably less than about 5 mm; step S13: grinding (physical activation) the waste glass particles by a grinding and grading system to obtain finely ground glass powder having a predetermined particle size and a predetermined particle size distribution; the predetermined particle size must be less than about 75 µm, preferably less than about 45 µm, more preferably less than about 35 µm, and even more preferably less than about 25 µm; the predetermined particle size distribution is preferably less than about 5% of a sieve residue, more preferably less than about 3%, and even more preferably less than about 1%, so as to serve as a pozzolanic material; and (optionally) step S14: further chemically activating the finely ground glass powder using a chemical auxiliary agent.

In one embodiment, before the crushing step and/or the grinding step, the waste glass is further sorted according to its type and/or color, for example, into colorless transparent glass and colored glass. The sorting method may include, but is not limited to, magnetic separation, air separation, screening or other processing methods.

In one embodiment, the chemical activation method uses one or any combination of chemical auxiliary agents such as diethylene glycol, triethanolamine, triisopropanolamine, etc. as a surface modifier to improve the charge dispersion effect on the surface of the waste glass particles, thereby enhancing the pozzolanic hydration reaction. The addition ratio can be adjusted appropriately as needed (for example, 0.035% of the weight of the finely ground glass powder).

In one embodiment, the finely ground glass powder prepared by the method of the present invention has a predetermined specific surface area, preferably about 2500 cm²/g to about 8000 cm²/g, and more preferably about 3000 cm²/g to about 6000 cm²/g.

In one embodiment, the waste glass selected may be derived from glass containers, flat glass, solar photovoltaic panel glass, glass electronic screens and other types of glass. According to the main components, it can be classified into soda-lime glass, borosilicate glass or quartz glass, etc.; and according to the type of glass, it can be general glass or tempered glass, etc.

In one embodiment, the pozzolanic material prepared by the method of FIG. 1 may include not only the finely ground glass powder but also common coal fly ash, silica ash, etc.

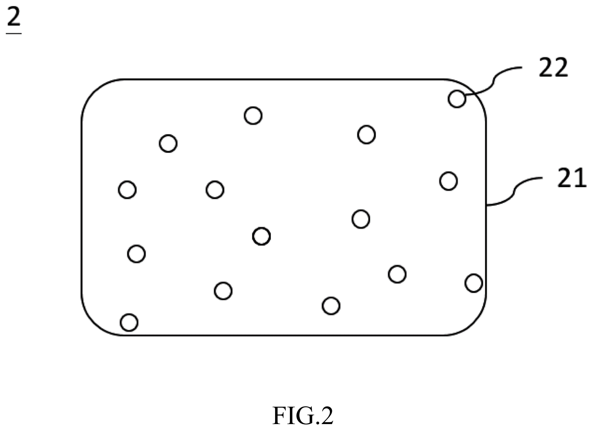

Referring to FIG. 2, it is a schematic diagram of a pozzolanic product according to an embodiment of the present invention. As shown in the figure, the pozzolanic product 2 includes a body 21 and the finely ground glass powder 22 of the present invention. The body 21 can be designed into any shape according to the needs of the user or the builder, such as a two-dimensional or three-dimensional circular shape, square shape, conical shape, arched shape, spherical shape, cylindrical shape or irregular shape. In one embodiment, the pozzolanic product 2 may further include a cementitious material such as cement. In one embodiment, the pozzolanic product 2 may further be concrete or cement mortar. The pozzolanic product 2 may be, for example, a building, a decoration, a container or a mold.

### Examples

### Materials and methods

Sources of waste glass may include container glass, flat glass, solar photovoltaic panels and/or TFT-LCD liquid crystal substrate glass. Container glass and flat glass may come from waste glass generated by glass recycling agencies, while solar photovoltaic panel glass may come from waste solar photovoltaic panel processing agencies, or from waste electronic components, leftovers and defective products in the solar photovoltaic panel manufacturing process; and TFT-LCD liquid crystal substrate glass comes from waste glass substrates used in the TFT-LCD manufacturing process.

The collected waste glass may be screened by type and/or color, crushed, and processed to obtain high-purity waste glass particles. Subsequently, the waste glass particles are physically activated into finely ground glass powder through a grinding and grading system, and chemical activation methods are used as needed to increase the specific surface area (fineness) of the waste glass particles, thereby forming a highly active pozzolanic material.

### Grindability test of waste glass

Waste glass of the same source and mass was uniformly crushed to less than 5 mm by a crusher, and then the waste glass particles were put into a ball mill for grinding. After different grinding times (20 minutes, 40 minutes, 60 minutes, and 80 minutes), the amount of finely ground glass powder that did not pass through a 45 µm sieve (hereinafter referred to as "45 µm sieve residue") was measured. The smaller the amount, the more uniform the particle size distribution of the finely ground glass powder. The expected value is a 45 µm sieve residue of less than about 5% (see Example A). The results of different grinding times on the 45 µm sieve residue are shown in Table 1.

**Table 1**

| Finely ground glass powder | Grinding time | | | |
|---|---|---|---|---|
| | 20 minutes | 40 minutes | 60 minutes | 80 minutes |
| 45 µm sieve residue | 38% | 9.9% | 5.1% | 2.8% |

Since the Mohs hardness of glass is 6, which is only slightly lower than quartz (hardness 7) and higher than limestone (hardness 3), waste glass is a material that is more difficult to grind. As shown by the grindability test results of waste glass in Table 1, a physical activation method is required to improve the grinding fineness and particle size distribution of waste glass particles, thereby obtaining the desired finely ground glass powder.

### Activity index of finely ground glass powder applied to cement

### Example A

The results of the activity index test of the 45 µm sieve residue at different grinding times for finely ground glass powder of the same source and quality according to the CNS 10896 test method (as a pozzolanic material and replacing 20% of the weight of cement) are shown in Table 2, which shows that the activity index increases as the 45 µm sieve residue decreases. When grinding for 60 minutes, 45 µm sieve residue of the finely ground glass powder is the desired 5.1%. At this time, the 28-day activity index can reach about 85% of the Control Group, and it has a good pozzolanic reaction, as shown in Test Group C. When the grinding time is extended to 80 minutes, 45 µm sieve residue of the finely ground glass powder is only 2.8%, and the best activity index is exhibited at this time, as shown in Test Group D. Therefore, after physical activation of waste glass, the particle size distribution of the finely ground glass powder will be the key factor affecting the activity index. Considering that the activity indexes of Test Groups have reached more than about 85% of that of Control Group, 45 µm sieve residue of the finely ground glass powder should be less than about 5% as an expected value.

**Table 2**

| No. | Finely ground glass powder (45 µm sieve residue) | Activity index (kgf/cm²) | | | Fluidity value (%) |
|---|---|---|---|---|---|
| | | 7 days | 14 days | 28 days | |
| Control Group (Pure cement mortar) | - | 340 (100%) | 379 (100%) | 431 (100%) | 105.5 |
| Test Group A (grinding for 20 min.) | 38 % | 252 (74%) | 283 (75%) | 316 (73%) | 120 |
| Test Group B (grinding for 40 min.) | 9.9% | 246 (72%) | 269 (71%) | 323 (75%) | 115.5 |
| Test Group C (grinding for 60 min.) | 5.1% | 240 (71%) | 304 (80%) | 367 (85%) | 115 |
| Test Group D (grinding for 80 min.) | 2.8% | 289 (85%) | 342 (90%) | 404 (94%) | 117 |

### Example B

The activity index test results of finely ground glass powder of the same source, same mass and same grinding time under different chemical activation methods according to the CNS 10896 test method are shown in Table 3, which shows that the use of different types of chemical auxiliary agents will affect the activity index and 45 µm sieve residue of the finely ground glass powder. Among them, Test Groups E to G (using combinations of chemical auxiliary agents, whose main components are (a) diethylene glycol, (b) triethanolamine and (c) triisopropanolamine) can effectively improve the grinding efficiency of waste glass (i.e., reducing the 45 µm sieve residue) and further improve the activity index of the finely ground glass powder as a pozzolanic material. In contrast, the Control Groups H and I (using combinations of chemical auxiliary agents, whose main components are (d) isopropyl alcohol: ethylene glycol = 1:1 and (e) sodium acrylate: sodium sulfate: sodium silicate = 17:2:1) had little effect on the grinding efficiency of waste glass, resulting in the activity index of Test Groups H and I being similar to or even lower than that of Test Group D without the addition of the chemical auxiliary agent. The results show that appropriate selection of chemical auxiliary agents (for example, combinations of (a), (b), and (c)) can effectively improve the grinding efficiency of the waste glass and increase its activity index as a pozzolanic material.

**Table 3**

| No. | Finely ground glass powder (45 µm sieve residue) | Activity index (kgf/cm²) | | | Fluidity value (%) |
|---|---|---|---|---|---|
| | | 7 days | 14 days | 28 days | |
| Control Group (Pure cement mortar) | - | 340 (100%) | 379 (100%) | 431 (100%) | 105.5 |
| Test Group D (Only grinding (for 80 min.)) | 2.8% | 289 (85%) | 342 (90%) | 404 (94%) | 117 |
| Test Group E (Grinding + Combination a of chemical auxiliary agents) | 0.8% | 279 (82%) | 350 (92%) | 410 (95%) | 113 |
| Test Group F (Grinding + Combination b of chemical auxiliary agents) | 0.6% | 305 (90%) | 350 (92%) | 418 (97%) | 118 |
| Test Group G (Grinding + Combination c of chemical auxiliary agents) | 0.9% | 298 (88%) | 348 (92%) | 426 (99%) | 118 |
| Control Group H (Grinding + Combination d of chemical auxiliary agents) | 1.6% | 279 (82%) | 322 (85%) | 384 (89%) | 121 |
| Control Group I (Grinding + Combination e of chemical auxiliary agents) | 2.7% | 264 (78%) | 297 (78%) | 375 (87%) | 119 |

### Example C

The activity index test results and finely ground glass powder of different waste glass types with the same mass, same grinding time and same chemical activation method according to the CNS 10896 test method are shown in Table 4. All the 45 µm sieve residues of the finely ground glass powder produced from four waste glass sources are less than 5%, the specific surface areas are 3300-5790 cm²/g, and the activity indexes (28 days) are 95-105%. These results indicate that, after the physical activation and chemical activation treatments of the present invention, the finely ground glass powder from different waste glass types can serve as a highly reactive pozzolanic material and can be effectively used in cement products or cement concrete.

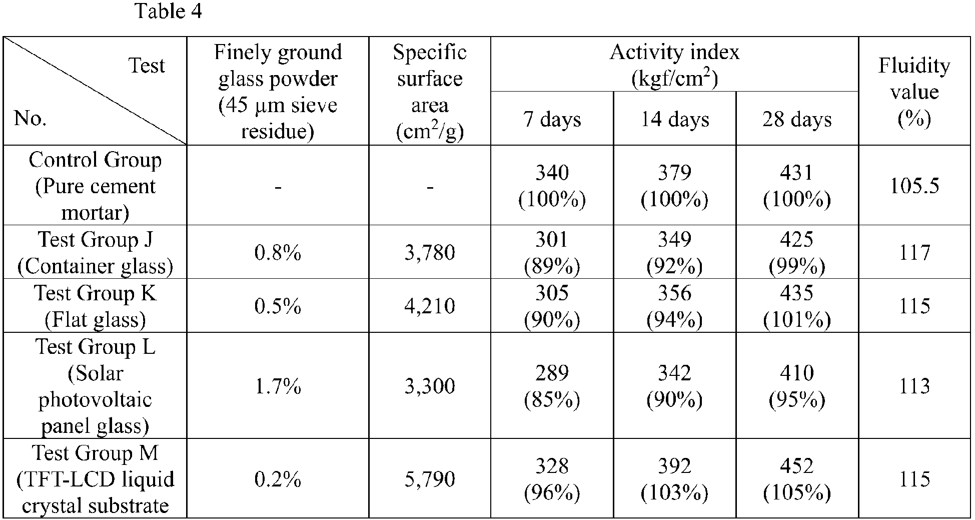

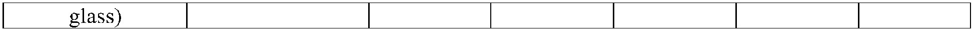

### Activity index of finely ground glass powder applied to concrete

In this experiment, the solar photovoltaic panel glass was ground and graded by physical activation and chemical activation methods to produce the finely ground glass powder with a sieve residue (45 µm) of less than 5%, and the replacement ratio was 15% of the cement weight. Compared with the container glass and flat glass, since the solar photovoltaic panel glass is a type of strengthened glass, under the same physical and chemical activation methods, the finely ground glass powder produced using the solar photovoltaic panel glass has a wider particle size distribution and a slightly lower specific surface area, but its 45 µm sieve residue can still be controlled within 5%.

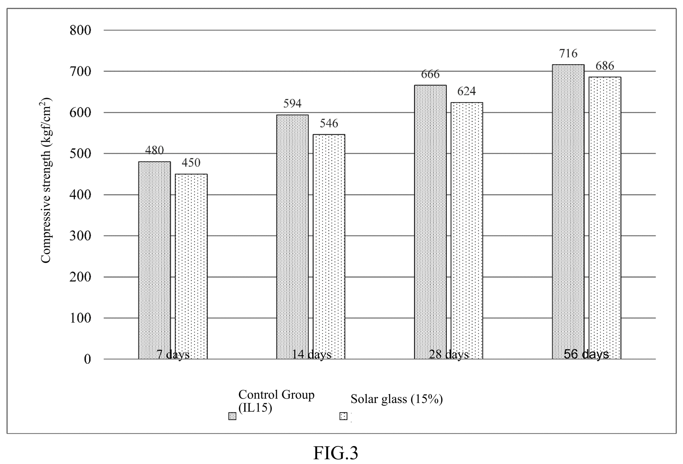

The strength test results of Portland limestone cement (IL) concrete using the finely ground glass powder of the same mass, same grinding time and same chemical activation method are shown in FIG. 3. The test results show that the activity index of concrete produced using the finely ground glass powder as the pozzolanic material can reach about 94% of the Control Group (concrete using pure cement mortar) on the 28^{th} day. This indicates that the finely ground glass powder treated by the physical activation and chemical activation of the present invention has a strength close to that of traditional cement in IL concrete and can partially replace cement, and is a low-carbon and highly reactive pozzolanic material that can be effectively used in cement products or cement concrete.

### Conclusion

Observation of the finely ground glass powder produced by the present invention using waste glass shows that the waste glass can effectively improve its activity index through appropriate physical activation and/or chemical activation treatments. When applied to cement and concrete, compared with traditional cement, the activity index can reach more than about 85% in 7 days and more than about 95% in 28 days. It can be seen from the above that the particle size and particle size distribution of the finely ground glass powder is one of the main factors affecting the activity index.

According to the experimental results of the above examples of the present invention, at least the following advantages can be demonstrated:
1. The present invention can effectively address the problem of insufficient concrete performance due to insufficient cementitious activity of waste glass used as a pozzolanic material.
2. the present invention uses the activated finely ground glass powder as a pozzolanic material, which can not only improve the recycling rate of waste glass, but also add the finely ground glass powder to concrete to replace part of the cement, thereby reducing the amount of cement added.
3. The finely ground glass powder of the present invention is waste glass having a predetermined particle size and a predetermined particle size distribution, which can undergo the pozzolanic reaction well with the cement clinker to effectively improve the working performance of concrete, thereby creating highly added value.

Many features and advantages of the present invention are apparent from the specification and, thus, it is intended that all such features and advantages falling within the true spirit and scope of the present invention are encompassed by the appended claims. Furthermore, since numerous modifications and changes will readily occur to those skilled in the art, the present invention is not limited to the exact process, construction, and operations shown and described, and all suitable modifications and equivalents are intended to fall within the scope of the present invention.

In addition, those skilled in the art will appreciate that the inventive concept can be readily used as a basis for other methods, structures and systems that achieve the multiple purposes of the present invention. Therefore, the appended claims should not be considered to be limited by what is described in the specification.

## Claims

1. A method for preparing a pozzolanic material, comprising:
collecting waste glass;
crushing the waste glass into waste glass particles having a predetermined size; and
grinding the waste glass particles to obtain finely ground glass powder having a predetermined particle size and a predetermined particle size distribution for serving as the pozzolanic material.

2. The method according to claim 1, wherein the predetermined size of the waste glass particles is less than about 10 mm.

3. The method according to one of the preceding claims, wherein the predetermined particle size of the finely ground glass powder is less than about 45 µm.

4. The method according to one of the preceding claims, wherein the predetermined particle size distribution of the finely ground glass powder has a sieve residue of less than about 5%.

5. The method according to one of the preceding claims, wherein the finely ground glass powder is further treated using a chemical auxiliary agent.

6. The method according to claim 5, wherein the chemical auxiliary agent comprises diethylene glycol, triethanolamine, triisopropanolamine, or any combination thereof.

7. The method according to one of the preceding claims, wherein the finely ground glass powder has a predetermined specific surface area, and preferably, the predetermined specific surface area ranges from about 2500 cm²/g to about 8000 cm²/g.

8. The method according to one of the preceding claims, wherein the waste glass is derived from a glass container, flat glass, solar photovoltaic panel glass, TFT-LCD liquid crystal substrate glass, or any combination thereof.

9. A pozzolanic material prepared by the method according to any one of claims 1 to 8.

10. The pozzolanic material according to claim 9, further comprising coal fly ash, silica ash, or any combination thereof.

11. A product, comprising a body having a predetermined shape; and the pozzolanic material according to claims 9 or 10.

12. The product according to claim 11, wherein the predetermined shape comprises a circular shape, a square shape, a conical shape, an arched shape, a spherical shape, a cylindrical shape or any shape designed as required.

13. The product according to claim 11 or 12, comprising a building, a decoration, a container or a mold.

14. The product according to any one of claims 11 to 13, further comprising cement.

15. The product according to any one of claims 11 to 14, further comprising concrete or cement mortar.
